# EUROPEAN PATENT APPLICATION

(11) **EP 4 572 412 A1**
(43) Date of publication of application: **18.06.2025**
(21) Application number: 22954677.5
(22) Date of filing: 12.08.2022
(51) Int. Cl.: H04W 48/18

(54) **INFORMATION PROCESSING METHODS, SYSTEM AND APPARATUS, COMMUNICATION DEVICE, AND STORAGE MEDIUM**

(71) Applicant: Beijing Xiaomi Mobile Software Co., Ltd., Beijing 100085 (CN)
(72) Inventor: SHANG, Zhengyi, Beijing 100085 (CN); LU, Wei, Beijing 100085 (CN)
(74) Representative: Dehns Germany Partnerschaft mbB
(86) International application number: PCT/CN2022/112330
(87) International publication number: WO 2024/031728

(57) **Abstract**

Provided in the embodiments of the present disclosure are information processing methods, system and apparatus, a communication device, and a storage medium. An information processing method is executed by an H-NWDAF, and comprises: in response to an analysis request in respect of at least one target UE, determining, on the basis of user consent information corresponding to the target UE, whether to send a request message to a V-NWDAF to request collected data and/or an analysis result in respect of the target UE from the VPLMN.

## Description

### TECHNICAL FIELD

The present disclosure relates to the field of wireless communication technology, but is not limited thereto, and in particular, to information processing methods, system and apparatuses, a communication device and a storage medium.

### BACKGROUND

In mobile communication scenarios, user equipment (UE) data often needs to be exchanged between different networks, for example, between home public land mobile network (HPLMN) and visited public land mobile network (VPLMN). However, this exchange and viewing of data between networks may expose user private data to HPLMN and VPLMN, resulting in security risks for user private data.

### SUMMARY

Embodiments of the present disclosure provide information processing methods, system and apparatuses, a communication device and a storage medium.

The first aspect of disclosed embodiments provides an information processing method, which is performed by a home-network data analytics function (H-NWDAF) and includes:
in response to an analysis request for at least one target user equipment UE, determining, based on user consent information corresponding to the target UE, whether to send a request message to a visited-network data analytics function (V-NWDAF) for requesting collected data and/or analysis result regarding the target UE in a visited public land mobile network (VPLMN).

The second aspect of disclosed embodiments provides an information processing method, which is performed by a V-NWDAF and includes:
determining, in response to receiving a request message sent by an H-NWDAF based on user consent information or receiving an indication of a visited-network exposure function (V-NEF), whether to send collected data and/or analysis result regarding a target UE in a VPLMN.

The third aspect of disclosed embodiments provides an information processing method, which is performed by a V-NEF and includes:
determining, in response to receiving a request message sent by an H-NWDAF based on user consent information, whether to indicate a V-NWDAF to send collected data and/or analysis result regarding a target UE in a VPLMN.

The fourth aspect of disclosed embodiments provides an information processing system, including an H-NWDAF, a V-NWDAF and a V-NEF;
the H-NWDAF is configured to, in response to an analysis request for at least one target UE, determine based on user consent information corresponding to the target UE, whether to send a request message to the V-NWDAF for requesting collected data and/or analysis result regarding the target UE in a VPLMN;
the V-NWDAF is configured to determine, in response to receiving a request message sent by the H-NWDAF based on the user consent information or receiving an indication of the V-NEF, whether to send the collected data and/or analysis result regarding the target UE in the VPLMN; and
the V-NEF is configured to determine, in response to receiving the request message sent by the H-NWDAF based on the user consent information, whether to indicate the V-NWDAF to send the collected data and/or analysis result regarding the target UE in the VPLMN.

The fifth aspect of disclosed embodiments provides an information processing apparatus, which is applied to an H-NWDAF and includes:
a determining unit, configured to: in response to an analysis request for at least one target UE, determine, based on user consent information corresponding to the target UE, whether to send a request message to a V-NWDAF for requesting collected data and/or analysis result regarding the target UE in a VPLMN.

The sixth aspect of disclosed embodiments provides an information processing apparatus, which is applied to a V-NWDAF and includes:
a processing unit, configured to determine, in response to receiving a request message sent by an H-NWDAF based on user consent information or receiving an indication of a V-NEF, whether to send collected data and/or analysis result regarding a target UE in a VPLMN.

The seventh aspect of disclosed embodiments provides an information processing apparatus, which is applied to a V-NEF and includes:
an executing unit, configured to determine, in response to receiving a request message sent by an H-NWDAF based on user consent information, whether to indicate a V-NWDAF to send collected data and/or analysis result regarding a target UE in a VPLMN.

The eighth aspect of disclosed embodiments provides a communication device, including a processor, a memory, and an executable program stored in the memory and executable n by the processor, where the processor is configured to, upon executing the executable program, implement the method according to the aforementioned first aspect, second aspect or third aspect.

The ninth aspect of disclosed embodiments provides a computer storage medium that stores an executable program thereon, where the executable program, upon being executed by a processor, is used for implementing the method according to the aforementioned first aspect, second aspect or third aspect.

Based on the technical solution according to some embodiments of the present disclosure, in response to the analysis request for at least one target UE, it is determined, based on the user consent information corresponding to the target UE, whether to send a request message to the V-NWDAF for requesting collected data and/or analysis result regarding the target UE in the VPLMN. In this way, when it is necessary to obtain the collected data and/or analysis result for analyzing the UE from the VPLMN through the HPLMN, it can be more accurately determined, based on the user consent information of the target UE, whether the above information processing regarding the target UE is allowed, thereby determining whether to request the required data, so as to reduce the risk of the required data being exposed in the network and improve the privacy security of UE data when it is exchanged between different networks.

It should be understood that the above general description and the following detailed description are only exemplary and explanatory, and do not limit embodiments of this disclosure.

### BRIEF DESCRIPTION OF THE DRAWINGS

The accompanying drawings, which are incorporated in and constitute a part of this specification, illustrate embodiments consistent with the invention and together with the description serve to explain the principles of embodiments of the invention.
FIG. 1 is a schematic structural diagram of a wireless communication system according to an exemplary embodiment.
FIG. 2 is a schematic flowchart of an information processing method according to an exemplary embodiment.
FIG. 3 is a schematic flowchart of an information processing method according to an exemplary embodiment.
FIG. 4 is a schematic flowchart of an information processing method according to an exemplary embodiment.
FIG. 5 is a schematic flowchart of an information processing method according to an exemplary embodiment.
FIG. 6 is a schematic flowchart of an information processing method according to an exemplary embodiment.
FIG. 7 is a schematic flowchart of an information processing method according to an exemplary embodiment.
FIG. 8 is a schematic flowchart of an information processing method according to an exemplary embodiment.
FIG. 9 is a schematic flowchart of an information processing method according to an exemplary embodiment.
FIG. 10 is a schematic structural diagram of an information processing apparatus according to an exemplary embodiment.
FIG. 11 is a schematic structural diagram of an information processing apparatus according to an exemplary embodiment.
FIG. 12 is a schematic structural diagram of an information processing apparatus according to an exemplary embodiment.
FIG. 13 is a schematic structural diagram of a terminal according to an exemplary embodiment.
FIG. 14 is a schematic structural diagram of a communication device according to an exemplary embodiment.

### DETAILED DESCRIPTION

Exemplary embodiments will be described in detail herein, examples of which are illustrated in the accompanying drawings. When the following description refers to the drawings, the same numbers in different drawings refer to the same or similar elements unless otherwise indicated. The implementations described in the following exemplary embodiments do not represent all implementations consistent with embodiments of this disclosure. Rather, they are merely examples of apparatuses and methods consistent with some aspects of embodiments of this disclosure.

The terminologies used in the embodiments of this disclosure are for the purpose of describing specific embodiments only and are not intended to limit the embodiments of this disclosure. As used in the embodiments of this disclosure and the appended claims, the singular forms "a", "an" and "the" are intended to include the plural forms as well, unless the context clearly dictates otherwise. It will also be understood that the term "and/or" as used herein refers to and includes any and all possible combinations of one or more of the associated listed items.

It should be understood that although the terms "first", "second", "third", etc. may be used to describe various information in the embodiments of this disclosure, the information should not be limited to these terms. These terms are only used to distinguish information of the same type from each other. For example, without departing from the scope of the embodiments of this disclosure, the first information may also be called second information, and similarly, the second information may also be called first information. Depending on the context, the word "if" as used herein may be interpreted as "when" or "while" or "in response to determining that..."

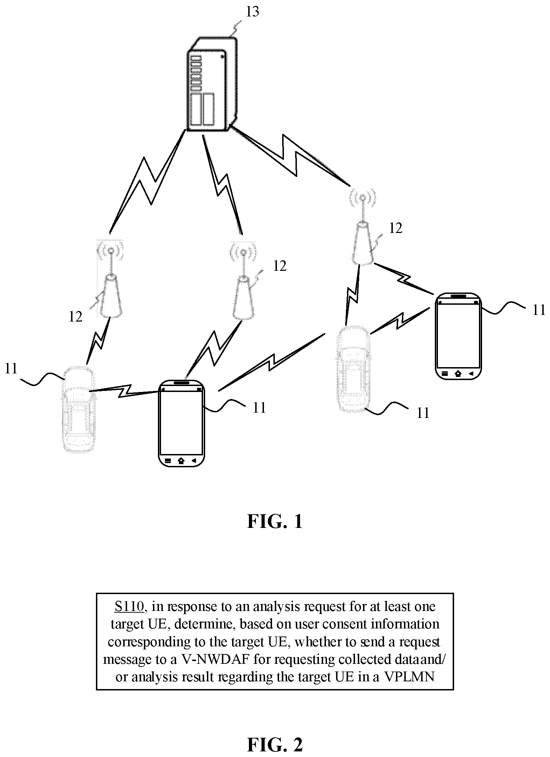

Referring to FIG. 1, which shows a schematic structural diagram of a wireless communication system according to an embodiment of this disclosure. As shown in FIG. 1, the wireless communication system is a communication system based on cellular mobile communication technology, and may include: several UEs 11 and several access devices 12.

In some embodiments, UE 11 may be a device that provides voice and/or data connectivity to the user. UE 11 can communicate with one or more core networks via a radio access network (RAN), and UE 11 can be an Internet of things (IoT) UE, such as a sensor device, a mobile phone (or called "cellular" phone), and a computer with an IoT UE. For example, it may be a fixed, portable, pocket, hand-held, computer built-in, or vehicle-mounted device, such as station (STA), subscriber unit, subscriber station, mobile station, mobile, remote station, access point, remote terminal, access terminal, user terminal, user agent, user device, or UE. Alternatively, UE 11 may also be equipment of an unmanned aerial vehicle. Alternatively, UE 11 may also be a vehicle-mounted device, for example, a trip computer with a wireless communication function, or a wireless user device connected externally to the trip computer. Alternatively, UE 11 may also be a roadside device, for example, a street lamp, a signal lamp, or other roadside devices with a wireless communication function.

The access device 12 may be a network side device in the wireless communication system. In some embodiments, the wireless communication system may be the 4th generation mobile communication (4G) system, also known as the LTE (Long Term Evolution) system. Alternatively, the wireless communication system may also be the 5G system, also known as NR (new radio) system or 5G NR system. Alternatively, the wireless communication system may also be a next-generation system of the 5G system. In some embodiments, the access network in the 5G system can be called NG-RAN (New Generation-Radio Access Network). Alternatively, it may be a MTC (machine type communication) system.

In some embodiments, the access device 12 may be an eNB (evolved node-B) adopted in 4G system. Alternatively, the access device 12 may also be a gNB adopting a centralization-distributed architecture in 5G system. When the access device 12 adopts the centralization-distributed architecture, it generally includes a CU (central unit) and at least two DUs (distributed units). The CU is provided with a PDCP (packet data convergence protocol) layer, an RLC (radio link layer) protocol layer, a MAC (media access control) layer protocol stack; and the DU is provided with a PHY (physical) layer protocol stack. Embodiments of the disclosure do not limit specific implementation of the access device 12.

A wireless connection may be established between the access device 12 and UE 11 through a wireless air interface. In different embodiments, the wireless air interface is a wireless air interface based on the 4G standard; alternatively, the wireless air interface is a wireless air interface based on the 5G standard, for example, a new air interface; alternatively, the wireless air interface may also be a wireless air interface based on a technical standard of a next-generation mobile communication network based on 5G.

Optionally, the above wireless communication system may further include a network management device 13. Several access devices 12 are connected to the network management device 13 respectively. The network management device 13 may be a core network device in the wireless communication system. For example, the network management device 13 may be a mobility management entity (MME) in an evolved packet core (EPC) network. Alternatively, the network management device may also be other core network devices, such as serving gateway (GW), public data network gateway (PGW), policy and charging rules function (PCRF), home subscriber server (HSS), or the like. Embodiments of the present disclosure do not limit the implementation form of the network management device 13.

As shown in FIG. 2, embodiments of the present disclosure provide an information processing method, which is performed by a home-network data analytics function (H-NWDAF) and includes followings.

In S110, in response to an analysis request for at least one target user equipment (UE), it is determined, based on user consent information corresponding to the target UE, whether to send a request message to a visited-network data analytics function (V-NWDAF) for requesting collected data and/or analysis result regarding the target UE in a visited public land mobile network (VPLMN).

In some embodiments of the present disclosure, H-NWDAF can be used to execute or instruct the execution of data analytics services for the target UE. For example, relevant data of the UE can be collected before using analysis and prediction models to perform evaluation and analysis services on the UE. The target UE is the UE requested to be analyzed in the analysis request, and at least one target UE may include a specified target UE, a UE group containing multiple target UEs, or all target UEs.

In some embodiments, the analysis request may be received from and sent by a consumer network function (Consumer NF) in HPLMN, or may be detected after being generated in H-NWDAF. For example, if an application is to analyze at least one target UE, it can send an analysis request to H-NWDAF through consumer NF or application function (AF). For example, when H-NWDAF is to perform data analytics services for the target UE, H-NWDAF can generate an analysis request for the target UE.

In some embodiments, when the analysis request is issued by AF as a consumer NF, the analysis request may be received through a network exposure function (NEF). Accordingly, feedbacking the collected data and/or analysis result may include feeding the collected data and/or analysis result back to NEF.

In some embodiments, the analysis request may carry the UE identity of the at least one target UE. For example, the UE identity may be a UE name, UE identity information (ID), or UE serial number.

When there is one target UE, the analysis request may carry the UE identity of the target UE.

When there are multiple target UEs, the analysis request may carry the UE identities of multiple target UEs. Alternatively, there is preset association between the multiple target UEs, the analysis request may only carry the UE identity of one of the target UEs, and the analysis request indicates that the collected data and/or analysis result of the UEs having the preset association with the target UE corresponding to the UE identity are requested.

In some embodiments, the analysis request may further carry indication information indicating whether the target UE is in a roaming state. For example, the indication information may be a flag bit, such as a bit. When the flag bit is a first preset value, such as 1, it means that the target UE is in the roaming state; and when the flag bit is a second preset value, such as 0, it means that the target UE is not in the roaming state.

In some embodiments, the analysis request may further carry a network identity of the VPLMN to which the target UE currently belongs. For example, the network identity may be a PLMN ID, or the like.

In some embodiments, the user consent information (User Consent) can be bound to the UE identity. For example, the user consent information may indicate the UE's subscription permanent identifier (SUPI) and/or generic public subscription identifier (GPSI), or the like. The user consent information may indicate whether the collected data and/or analysis result of the UE in the VPLMN are allowed to be obtained. For example, it may indicate a specific data analytics service agreed to be used or information agreed to be requested and obtained regarding a specific UE in a specific network such as VPLMN and/or HPLMN.

In some embodiments, the user consent information may be stored in H-NWDAF or unified data management (UDM).

In some embodiments, the user consent information may be VPLMN specific user consent. For example, it may indicate, in a specified VPLMN, whether H-NWDAF is allowed to request and obtain the UE's collected data and/or analysis result in the VPLMN.

In some embodiments, the collected data regarding the target UE in the VPLMN may be the data collected by the VPLMN or applications or network functions in the VPLMN regarding the UE when the target UE accesses the VPLMN or is provided with services by the VPLMN. The analysis result regarding the target UE in the VPLMN may be a data analysis result obtained by a network element(s) in the VPLMN performing data analytics service(s) based on the collected data, and the like.

In some embodiments, the user consent information may include information such as the service ID of the data analytics service being executed.

In some embodiments, the request message may be a message sent to the V-NWDAF for requesting to obtain the collected data and/or analysis result regarding the target UE in the VPLMN. The request message may carry at least one of the UE identity of the target UE, the PLMN ID of the VPLMN and/or the PLMN ID of the HPLMN, the service ID of the data analytics service to be executed, and the information content requested to be obtained. The information content requested to be obtained may include collected data and/or analysis result regarding the target UE in the VPLMN.

In some embodiments, determining, based on the user consent information corresponding to the target UE, whether to send the request message requesting collected data and/or analysis result regarding the target UE in the VPLMN may include: determining, based on the user consent information corresponding to the target UE, whether to allow the H-NWDAF to request and obtain the collected data and/or analysis result from the VPLMN and, if yes, sending the request message requesting the collected data and/or analysis result regarding the target UE in the VPLMN.

In this way, when the H-NWDAF is required to obtain the collected data and/or analysis result for analyzing the UE from the VPLMN, it can be more accurately determined whether the information acquisition of the target UE is allowed based on the user consent information of the target UE, thereby determining whether to request the required data. In this way, the risk of required information being exposed in the network can be reduced, and the privacy security of UE data exchanged between different networks can be improved.

In some embodiments, the method may further include:
feedbacking the collected data and/or analysis result.

In some embodiments of the present disclosure, feedbacking the collected data and/or analysis result may include, when the analysis request is sent to H-NWDAF by another device, feedbacking the collected data and/or analysis result to the sender of the analysis request. For example, when receiving an analysis request sent by AF or NEF, it is determined, based on the user consent information corresponding to the target UE, whether to send a request message to V-NWDAF for requesting collected data and/or analysis result regarding the target UE in the VPLMN, and the collected data and/or analysis result is fed back to the AF or NEF.

In some embodiments, the target UE is a UE in a roaming state.

The method further includes:
querying, based on a UE identity of the target UE carried in the analysis request, the user consent information corresponding to the target UE in UE context.

In some embodiments of the present disclosure, the user consent information corresponding to the UE can be recorded in the UE context stored in H-NWDAF. For example, each UE corresponds to a group of UE context(s) recorded in H-NWDAF, and, in the UE context(s), the user consent information corresponding to the UE, such as the user consent information bound to the UE identity, can be recorded; or the user consent information corresponding to VPLMN where the UE is located, for example, VPLMN specific user consent information bound to the PLMN ID of the VPLMN and/or the UE identity, can be recorded.

In some embodiments, querying the corresponding user consent information based on the UE identity may include querying the user consent information bound to the UE identity, or querying user consent information indicating the target UE corresponding to the UE identity allows the collected data and/or analysis result to be requested and obtained.

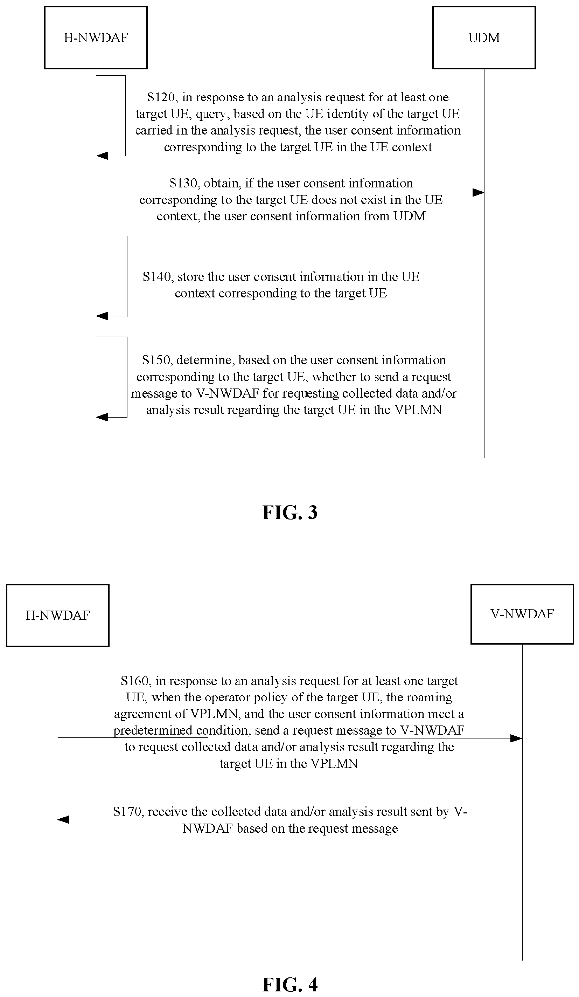

As shown in FIG. 3, some embodiments of the present disclosure provide an information processing method, which is performed by H-NWDAF and includes followings.

In S120, in response to an analysis request for at least one target UE, it is queried, based on the UE identity of the target UE carried in the analysis request, the user consent information corresponding to the target UE in the UE context.

In S130, if the user consent information corresponding to the target UE does not exist in the UE context, the user consent information is obtained from UDM.

In S140, the user consent information is stored in the UE context corresponding to the target UE.

In S150, based on the user consent information corresponding to the target UE, it is determined whether to send a request message to V-NWDAF for requesting collected data and/or analysis result regarding the target UE in the VPLMN.

In some embodiments of the present disclosure, obtaining the user consent information from the UDM may include sending the UE identity of the target UE to the UDM, and indicating the UDM to query the user consent information bound to the UE identity, or to query VPLMN-specific user consent information associated with the UE identity, or the like.

In some embodiments, UDM can store user consent information, operator policies, and regulatory policies. Herein, the regulatory policies may be bound to identifier(s) of the country or region, thereby indicating whether to allow H-NWDAF to request and obtain collected data and/or analysis result, and the like.

In some embodiments, obtaining user consent information from UDM may include sending to UDM a message requesting user consent information, such as sending a "Nudm_SDM_GetRequest" message, thereby indicating UDM to query and return the corresponding user consent information.

In some embodiments, obtaining user consent information from UDM may include sending a "Nudm_SDM_GetRequest" message to UDM and receiving a "Nudm_SDM_Get Response" message returned by UDM, where the "Nudm_SDM_Get Response" message carries the user consent information requested and obtained by H-NWDAF.

In some embodiments, storing the user consent information in UE context corresponding to the target UE may include storing the user consent information in UE context bound to a UE identity corresponding to the user consent information. The UE context may be accessed by, after querying the user consent information in step S120, if there is no user consent information, caching the UE context; and, after obtaining the user consent information from the UDM, storing the user consent information in the UE context.

In this way, when there is no user consent information in the UE context recorded by H-NWDAF, the user consent information is obtained through UDM and saved in the UE context, so the user consent information can be kept updated in the UE context. Subsequently, when the user consent information of the UE is to be obtained later, it can be obtained directly based on the UE context, thereby improving the efficiency of information processing.

As shown in FIG. 4, some embodiments of the present disclosure provide an information processing method, which is performed by H-NWDAF and includes followings.

In S160, in response to an analysis request for at least one target UE, when the operator policy of the target UE, the roaming agreement of VPLMN, and the user consent information meet a predetermined condition, a request message is sent to V-NWDAF to request collected data and/or analysis result regarding the target UE in the VPLMN.

In S170, the collected data and/or analysis result sent by V-NWDAF is received based on the request message.

In some embodiments of the present disclosure, the operator policy, regulatory policy, roaming agreement of VPLMN corresponding to the target UE, and user consent information can be recorded in H-NWDAF. The predetermined condition may include: the operator policy, regulatory policy, roaming agreement, and user consent information all indicate that it is allowed to request the collected data and/or analysis result regarding the target UE from VPLMN.

In some embodiments, the predetermined condition may indicate that it is allowed to request for providing collected data and/or analysis regarding the target UE in VPLMN to the consumer NF in HPLMN. For example, the predetermined condition may include: the operator policy, regulatory policy, roaming agreement, and user consent information all allow to request for providing collected data and/or analysis regarding the target UE in VPLMN to the consumer NF in HPLMN.

In some embodiments, the request message may carry the UE identity of the target UE, and/or the PLMN ID of the VPLMN, and the like. For example, sending the request message to the V-NWDAF may include forwarding the analysis request for the at least one target UE to the V-NWDAF.

In some embodiments, receiving the collected data and/or analysis result sent by V-NWDAF based on the request message may include receiving the collected data and/or analysis result sent by V-NWDAF based on the request message and the regulatory policy and/or operator policy.

In some embodiments, the user consent information indicates at least one of the following:
a UE identity of a specific UE;
a network identity of the VPLMN and/or a network identity of an HPLMN corresponding to the specific UE;
characteristic information of data analytics service;
result information of the data analytics service.

In some embodiments of the present disclosure, the specific UE is a UE to which the user agrees to information binding, that is, a UE corresponding to the collected data and/or analysis result indicated in the VPLMN that is allowed to be requested and obtained. The UE identity may be the SUPI or GPSI of the UE, or the like. The network identity may be an identifier of a service provider that provides data analytics services for the UE, such as a network ID, for example, the PLMN ID of VPLMN and HPLMN, or the like.

In some embodiments, the characteristic information of the data analytics service may indicate identity information of multiple dimensions of the data analytics service. For example, it may include at least one of the following: service name, service type, service ID of the data analytics service, application ID (APP ID) corresponding to the data analytics service, ID of network element or network function that performs operations related to the data analytics service, or the like.

In some embodiments, the result information of the data analytics service may indicate whether to allow data processing according to the data analytics service. If the UE agrees to disclose the collected data and/or analysis result to HPLMN or VPLMN, the result information of the data analytics service may include at least one of the following:
only processed in HPLMN, indicating that the data and/or analysis result obtained in HPLMN can only be processed in HPLMN, that is, the collected data and/or analysis result can only be provided to the consumer NF in HPLMN;
only processed in VPLMN, indicating that the data and/or analysis result obtained in VPLMN can only be processed in VPLMN, that is, the collected data and/or analysis result can only be provided to the consumer NF in VPLMN;
provided to VPLMN and HPLMN, indicating that the analysis result in VPLMN can be provided to HPLMN according to the operator policy and/or regulatory policy, and the analysis result in HPLMN can be provided to VPLMN according to the operator policy and/or regulatory policy; but the collected data regarding the target UE in VPLMN cannot be provided to HPLMN, and the collected data regarding the target UE in HPLMN cannot be provided to HPLMN;
processed in VPLMN and HPLMN, indicating that, according to the operator policy and/or regulatory policy, the data obtained in HPLMN or VPLMN can be processed in VPLMN and/or HPLMN, that is, the collected data and/or analysis result regarding the target UE in HPLMN can be exchanged between VPLMN and HPLMN, and the collected data and/or analysis result regarding the target UE in VPLMN can be exchanged between VPLMN and HPLMN.

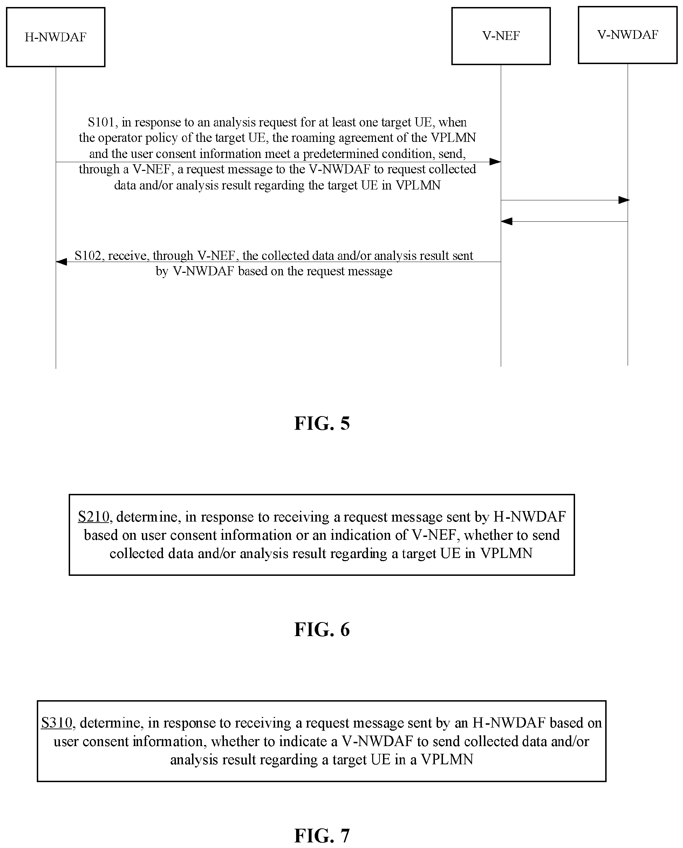

As shown in FIG. 5, some embodiments of the present disclosure provide an information processing method, which is performed by H-NWDAF and includes followings.

In S101, in response to an analysis request for at least one target UE, when the operator policy of the target UE, the roaming agreement of the VPLMN and the user consent information meet a predetermined condition, a request message is sent, through a V-NEF, to the V-NWDAF to request collected data and/or analysis result regarding the target UE in VPLMN.

In S102, the collected data and/or analysis result sent by V-NWDAF based on the request message is received through V-NEF.

In some embodiments of the present disclosure, the operator policy, regulatory policy, roaming agreement of VPLMN corresponding to the target UE, and user consent information can be recorded in H-NWDAF. The predetermined condition may include: the operator policy, regulatory policy, roaming agreement, and user consent information all indicate that it is allowed to request the collected data and/or analysis result regarding the target UE from VPLMN.

Here, receiving, through V-NEF, the collected data and/or analysis result sent by V-NWDAF based on the request message may include receiving, through V-NEF, the collected data and/or analysis result sent by V-NWDAF based on the request message upon indication from V-NEF. Herein, V-NEF may receive the collected data and/or analysis result sent by V-NWDAF based on the request message after indicating V-NWDAF to send the collected data and/or analysis result based on the request message, for example, after forwarding the request message to V-NWDAF, and then forward the collected data and/or analysis result to H-NWDAF.

In some embodiments, the predetermined condition may indicate that it is allowed to request for providing collected data and/or analysis regarding the target UE in VPLMN to the consumer NF in HPLMN. For example, the predetermined condition may include: the operator policy, regulatory policy, roaming agreement, and user consent information all allow to request for providing collected data and/or analysis regarding the target UE in VPLMN to the consumer NF in HPLMN.

In some embodiments, the request message may carry the UE identity of the target UE, and/or the PLMN ID of the VPLMN, or the like. For example, sending the request message to the V-NEF may include forwarding an analysis request for at least one target UE to the V-NEF. V-NEF may be configured to forward the request message to V-NWDAF. For example, when it is determined based on operator policy and/or regulatory policy that H-NWDAF is allowed to request and obtain collected data and/or analysis result from V-NWDAF, V-NEF forwards the request message to V-NWDAF.

In some embodiments, receiving the collected data and/or analysis result sent by V-NWDAF based on the request message upon indication from V-NEF may include receiving the collected data and/or analysis result sent by V-NWDAF based on the request message, as well as the regulatory policy and/or operator policy, upon indication from V-NEF.

As shown in FIG. 6, some embodiments of the present disclosure provide an information processing method, which is performed by V-NWDAF and includes followings.

In S210, in response to receiving a request message sent by H-NWDAF based on user consent information or an indication of V-NEF, it is determined whether to send collected data and/or analysis result regarding a target UE in VPLMN.

In some embodiments, the user consent information can be bound to the UE identity. For example, the user consent information may indicate the UE's SUPI and/or GPSI, or the like. The user consent information may indicate whether the collected data and/or analysis result of the UE in the VPLMN are allowed to be obtained. For example, it may indicate a specific data analytics service agreed to be used or information agreed to be requested and obtained regarding a specific UE in a specific network such as VPLMN and/or HPLMN.

In some embodiments, the user consent information may be stored in H-NWDAF or UDM.

In some embodiments, the user consent information may be VPLMN specific user consent. For example, it may indicate, in a specified VPLMN, whether H-NWDAF is allowed to request and obtain the UE's collected data and/or analysis result in the VPLMN.

In some embodiments, the collected data regarding the target UE in the VPLMN may be the data collected by the VPLMN or other UE(s), applications or network functions in the VPLMN regarding the UE when the target UE accesses the VPLMN or is provided with services by the VPLMN. The analysis result regarding the target UE in the VPLMN may be a data analysis result obtained by a network element(s) in the VPLMN performing data analytics service(s) based on the collected data, and the like.

In some embodiments, the user consent information may include information such as the service ID of the data analytics service being executed.

In some embodiments, the request message may be a message sent to the V-NWDAF for requesting to obtain the collected data and/or analysis result regarding the target UE in the VPLMN. The request message may carry at least one of the UE identity of the target UE, the PLMN ID of the VPLMN, the service ID of the data analytics service to be executed, and the information content requested to be obtained. The information content requested to be obtained may include collected data and/or analysis result regarding the target UE in the VPLMN.

In some embodiments, determining whether to send the collected data and/or analysis result regarding the target UE in the VPLMN may include: determining whether to send, through a V-NEF, the collected data and/or analysis result regarding the target UE in the VPLMN to the H-NWDAF.

In some embodiments, determining, in response to receiving the request message sent by the H-NWDAF based on the user consent information, whether to send the collected data and/or analysis result regarding the target UE in the VPLMN includes:
in response to receiving the request message sent by the H-NWDAF based on the user consent information, and determining, based on a regulatory policy and/or operator policy, that the H-NWDAF is allowed to request and obtain the collected data and/or analysis result, sending to the H-NWDAF the collected data and/or analysis result regarding the target UE in the VPLMN.

In some embodiments of the present disclosure, the regulatory policy and/or operator policy can be stored in the V-NWDAF. For example, the regulatory policy and/or operator policy corresponding to the UE identity and/or the PLMN ID of the VPLMN in the request message can be invoked based on the request message sent by the H-NWDAF.

In some embodiments, sending the collected data and/or analysis result regarding the target UE in the VPLMN to the H-NWDAF may include: obtaining, based on the UE identity of the target UE and/or the PLMN ID of the VPLMN corresponding to the target UE, the collected data and/or analysis result regarding the target UE in the VPLMN; and sending the collected data and/or analysis result to the H-NWDAF.

In some embodiments, receiving the request message sent by the H-NWDAF based on the user consent information may include receiving the request message forwarded by a V-NEF and sent by the H-NWDAF based on the user consent information.

In some embodiments, sending the collected data and/or analysis result regarding the target UE in the VPLMN to the H-NWDAF may include sending, through the V-NEF, the collected data and/or analysis result regarding the target UE in the VPLMN to the H-NWDAF.

In some embodiments, determining, in response to receiving the request message sent by the H-NWDAF based on the user consent information, whether to send the collected data and/or analysis result regarding the target UE in the VPLMN includes:
in response to receiving the request message forwarded by a V-NEF and sent by the H-NWDAF based on the user consent information, and determining, based on a regulatory policy and/or operator policy, that the H-NWDAF is allowed to request and obtain the collected data and/or analysis result, sending, through the V-NEF, the collected data and/or analysis result regarding the target UE in the VPLMN to the H-NWDAF.

As shown in FIG. 7, some embodiments of the present disclosure provide an information processing method, which is performed by a V-NEF and includes followings.

In S310, in response to receiving a request message sent by an H-NWDAF based on user consent information, it is determined whether to indicate a V-NWDAF to send collected data and/or analysis result regarding a target UE in a VPLMN.

In some embodiments of the present disclosure, the request message may carry the UE identity of the target UE, and/or the PLMN ID of the VPLMN, or the like. For example, sending the request message to the V-NEF may include forwarding an analysis request for at least one target UE to the V-NEF. V-NEF may forward the request message to V-NWDAF. For example, when it is determined, based on an operator policy and/or regulatory policy, that the H-NWDAF is allowed to request and obtain the collected data and/or analysis result from V-NWDAF, the request message is forwarded to V-NWDAF.

In some embodiments, receiving the collected data and/or analysis result sent by V-NWDAF based on the request message upon indication from V-NEF may include receiving the collected data and/or analysis result sent by V-NWDAF based on the request message, as well as the regulatory policy and/or operator policy, upon indication from V-NEF.

In some embodiments, in response to receiving the request message sent by the H-NWDAF based on the user consent information, determining whether to indicate the V-NWDAF to send the collected data and/or analysis result regarding the target UE in the VPLMN includes:
in response to receiving the request message sent by the H-NWDAF based on the user consent information, and determining, based on a regulatory policy and/or operator policy, that the H-NWDAF is allowed to request and obtain the collected data and/or analysis result from the V-NWDAF, forwarding the request message to the V-NWDAF, where the request message is used to indicate the V-NWDAF to send the collected data and/or analysis result regarding the target UE in the VPLMN.

In some embodiments, forwarding the request message to the V-NWDAF may include carrying verification information in the forwarded request message, where the verification information may indicate that the regulatory policy and/or operator policy allows the H-NWDAF to request and obtain the collected data and/or analysis result from the V-NWDAF. In this way, after receiving the request message forwarded by V-NEF, V-NWDAF can directly confirm, based on the verification information, that H-NWDAF is allowed to request and obtain the collected data and/or analysis result based on the regulatory policy and/or operator policy, without having to repeat verification performed according to the regulatory policy and/or operator policy.

In some embodiments, the method may further include:
forwarding the collected data and/or analysis result regarding the target UE in the VPLMN sent by the V-NWDAF to the H-NWDAF.

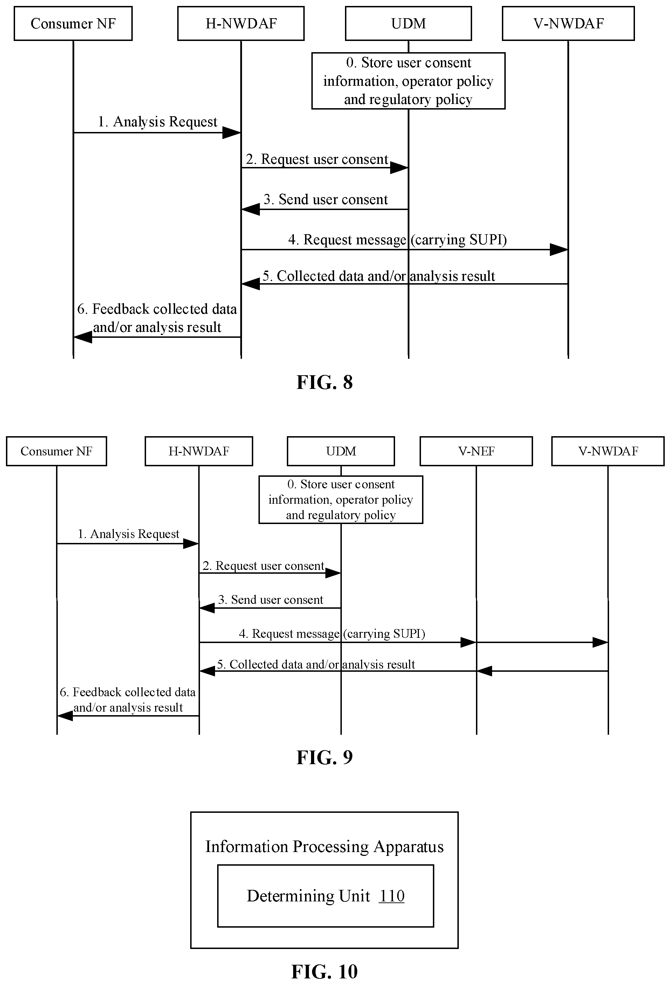

As shown in FIG. 8, some embodiments of the present disclosure provide an information processing method based on requesting collected data and/or analysis result of a target UE in V-NWDAF. Specifically, the method may include followings.

In block 0, UDM stores VPLMN specific user consent information, operator policies and/or regulatory policies. The VPLMN specific user consent information is associated with SUPI and stored in UDM as subscription data. The regulatory policies are country specific and can be used in roaming scenarios.

In block 1, a consumer NF in HPLMN sends an analysis request or analysis subscription request to H-NWDAF. The request includes setting a UE, a group of UEs, or any UE as a target of analysis report. If a group of UEs or any UE is used as the target of analysis report, the request may further include an indication of a roaming UE and a PLMN ID of a VPLMN.

Here, if AF serves as the consumer NF, it can request, through an NEF, to obtain the collected data and/or analysis result of AF from NWDAF.

In block 2, if there is no VPLMN specific user consent parameter in the UE context of H-NWDAF, H-NWDAF sends a Nudm_SDM_GetRequest message to UDM for querying user consent information.

In block 3, UDM queries the user consent information and sends a Nudm_SDM_Get Response message to H-NWDAF.

In block 4, upon receiving the "Nudm_SDM_Get Response" response message, H-NWDAF stores the VPLMN specific user consent information in the UE context of H-NWDAF. Based on the operator policy, regulatory policy, VPLMN's roaming agreement and the VPLMN specific user consent information, H-NWDAF determines whether it is allowed to request the collect data and/or analysis result from VPLMN to be provided to the consumer NF in HPLMN. If the user consent parameter indicates that H-NWDAF is allowed to request the collected data and/or analysis result from VPLMN, H-NWDAF discovers V-NWDAF and sends an analysis request to V-NWDAF.

In block 5, if the regulatory policy configured in V-NWDAF or provided to H-NWDAF indicates that H-NWDAF is allowed to request the collected and/or analysis result, V-NWDAF provides the collected data and/or analysis result to H-NWDAF.

In block 6, H-NWDAF obtains the collected data and/or analysis result, and sends a Nnwdaf_AnalyticsSubscription_Notify message to the consumer NF in HPLMN.

As shown in FIG. 9, some embodiments of the present disclosure provide an information processing method based on requesting collected data and/or analysis result of a target UE in V-NWDAF. Specifically, the method may include followings.

In block 0, UDM stores VPLMN specific user consent information, operator policies and/or regulatory policies. The VPLMN specific user consent information is associated with SUPI and stored in UDM as subscription data. The regulatory policies are country/region specific and can be used in roaming scenarios.

In block 1, a consumer NF in HPLMN sends an analysis request or analysis subscription request to H-NWDAF. The request includes setting a UE, a group of UEs, or any UE as a target of analysis report. If a group of UEs or any UE is used as the target of analysis report, the request may further include an indication of a roaming UE and a PLMN ID of a VPLMN.

In block 2, If there is no VPLMN specific user consent parameter in the UE context of H-NWDAF, H-NWDAF sends a Nudm_SDM_GetRequest message to UDM for querying user consent information.

In block 3, UDM queries the user consent information and sends a Nudm_SDM_Get Response message to H-NWDAF.

In block 4, upon receiving the "Nudm_SDM_Get Response" message, H-NWDAF stores the VPLMN specific user consent information in the UE context of H-NWDAF. Based on the operator policy, regulatory policy, VPLMN's roaming agreement and the VPLMN specific user consent information, H-NWDAF determines whether it is allowed to request the collect data and/or analysis result from VPLMN to be provided to the consumer NF in HPLMN. If the user consent parameter indicates that H-NWDAF is allowed to request the collected data and/or analysis result from VPLMN, H-NWDAF sends an analysis request to V-NEF, and V-NEF forwards the request to V-NWDAF.

Optionally, the V-NEF determines to forward the request to the V-NWDAF based on a regulatory policy configured in or provided to the V-NEF indicating whether the H-NWDAF is allowed to request the collected data and/or analysis result from the VPLMN.

In block 5, V-NWDAF provides the collected data and/or analysis result to H-NWDAF through V-NEF. Optionally, the V-NWDAF determines to provide the collected data or analysis to the H-NWDAF based on a regulatory policy configured in or provided to the V-NWDAF indicating whether the H-NWDAF is allowed to request the collected data and/or analysis from the V-NWDAF.

In block 6, H-NWDAF obtains the collected data and/or analysis result, and sends a Nnwdaf_AnalyticsSubscription_Notify message to the consumer NF in HPLMN.

Som embodiments of the present disclosure provide an information processing system, which may include: H-NWDAF, V-NWDAF, and V-NEF;
the H-NWDAF is configured to, in response to an analysis request for at least one target UE, determine based on user consent information corresponding to the target UE, whether to send a request message for requesting collected data and/or analysis result regarding the target UE in a VPLMN; and feedback the collected data and/or analysis result;
the V-NWDAF is configured to determine, in response to a request message sent by the H-NWDAF based on the user consent information or an indication of the V-NEF, whether to send the collected data and/or analysis result regarding the target UE in the VPLMN; and
the V-NEF is configured to determine, in response to the request message sent by the H-NWDAF based on the user consent information, whether to indicate the V-NWDAF to send the collected data and/or analysis result regarding the target UE in the VPLMN.

In some embodiments, H-NWDAF is further configured to feedback the collected data and/or analysis result.

In some embodiments, the target UE is a UE in roaming state.

H-NWDAF is further configured to query the user consent information corresponding to the target UE in the UE context based on the UE identity of the target UE carried in the analysis request.

In some embodiments, H-NWDAF is further configured to obtain the user consent information from UDM when there is no user consent information corresponding to the target UE in the UE context; and store the user consent information in the UE context corresponding to the target UE.

In some embodiments, H-NWDAF is configured to send a request message to V-NWDAF to request collected data and/or analysis result regarding the target UE in the VPLMN when the operator policy of the target UE, the roaming agreement of the VPLMN, and the user consent information meet a predetermined condition; and receive the collected data and/or analysis result sent by V-NWDAF based on the request message.

In some embodiments, H-NWDAF is configured to send, through by a V-NEF, a request message to V-NWDAF for requesting collected data and/or analysis result regarding the target UE in the VPLMN when the operator policy of the target UE, the roaming agreement of the VPLMN and the user consent information meet a predetermined condition; and receive, through the V-NEF, the collected data and/or analysis result sent by V-NWDAF based on the request message.

In some embodiments, the user consent message indicates at least one of the following:
a UE identity of a specific UE;
a network identity of the VPLMN and/or a network identity of an HPLMN corresponding to the specific UE;
characteristic information of data analytics service;
result information of the data analytics service.

In some embodiments, the V-NWDAF is configured to, in response to receiving a request message sent by the H-NWDAF based on the user consent information, and determining, based on a regulatory policy and/or operator policy, that the H-NWDAF is allowed to request and obtain the collected data and/or analysis result, send the collected data and/or analysis result regarding the target UE in the VPLMN to the H-NWDAF.

In some embodiments, the V-NWDAF is configured to, in response to receiving a request message sent by the H-NWDAF based on the user consent information, and determining, based on a regulatory policy and/or operator policy, that the H-NWDAF is allowed to request and obtain the collected data and/or analysis result, send, through a V-NEF, the collected data and/or analysis result regarding the target UE in the VPLMN to the H-NWDAF.

In some embodiments, the V-NEF is configured to, in response to receiving a request message sent by the H-NWDAF based on the user consent information, and determining, based on a regulatory policy and/or operator policy, that the H-NWDAF is allowed to request and obtain the collected data and/or analysis result from V-NWDAF, forward the request message to V-NWDAF, where the request message is used to indicate V-NWDAF to send the collected data and/or analysis result regarding the target UE in the VPLMN.

As shown in FIG. 10, some embodiments of the present disclosure provide an information processing apparatus applied to H-NWDAF.

The apparatus includes a determining unit 110, configured to, in response to an analysis request for at least one target UE, determine, based on user consent information corresponding to the target UE, whether to send a request message to a V-NWDAF for requesting collected data and/or analysis result regarding the target UE in a VPLMN.

In some embodiments, the apparatus further includes:
a feedback unit, configured to feedback the collected data and/or analysis result.

In some embodiments, the target UE is a UE in a roaming state; and
the apparatus further includes:
a query unit, configured to query the user consent information corresponding to the target UE in the UE context based on a UE identity of the target UE carried in the analysis request.

In some embodiments, the apparatus further includes:
an obtaining unit, configured, when the user consent information corresponding to the target UE does not exist in the UE context, obtaining the user consent information from a UDM; and
store the user consent information in the UE context corresponding to the target UE.

In some embodiments, the determining unit 110 is configured to:
send, when an operator policy of the target UE, a roaming agreement of the VPLMN and the user consent information meet a predetermined condition, the request message to the V-NWDAF for requesting the collected data and/or analysis result regarding the target UE in the VPLMN; and
receive the collected data and/or analysis result sent by the V-NWDAF based on the request message.

In some embodiments, the user consent message indicates at least one of the following:
a UE identity of a specific UE;
a network identity of the VPLMN and/or a network identity of an HPLMN corresponding to the specific UE;
characteristic information of data analytics service;
result information of the data analytics service.

In some embodiments, the determining unit 110 is configured to:
when an operator policy of the target UE, a roaming agreement of the VPLMN and the user consent information meet a predetermined condition, send, through a V-NEF, the request message to the V-NWDAF for requesting the collected data and/or analysis result regarding the target UE in the VPLMN;
receive, through the V-NEF, the collected data and/or analysis result sent by the V-NWDAF based on the request message; and
feedback the collected data and/or analysis result.

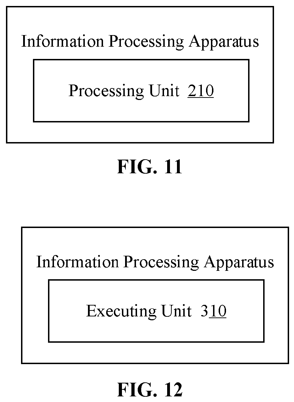

As shown in FIG. 11, some embodiments of the present disclosure provide an information processing apparatus applied to V-NWDAF.

The apparatus may include a processing unit 210, configured to determine, in response to receiving a request message sent by an H-NWDAF based on user consent information or receiving an indication of a V-NEF, whether to send collected data and/or analysis result regarding a target UE in a VPLMN.

In some embodiments, the processing unit 210 is configured to:
in response to receiving the request message sent by the H-NWDAF based on the user consent information, and determining, based on a regulatory policy and/or operator policy, that the H-NWDAF is allowed to request and obtain the collected data and/or analysis result, send to the H-NWDAF the collected data and/or analysis result regarding the target UE in the VPLMN.

In some embodiments, the processing unit 210 is configured to:
in response to receiving the request message, sent by the H-NWDAF based on the user consent information, forwarded by the V-NEF, and determining, based on a regulatory policy and/or operator policy, that the H-NWDAF is allowed to request and obtain the collected data and/or analysis result, send, through the V-NEF, to the H-NWDAF the collected data and/or analysis result regarding the target UE in the VPLMN.

As shown in FIG. 12, some embodiments of the present disclosure provide an information processing apparatus applied to V-NEF.

The apparatus may include: an executing unit 310, configured to determine, in response to receiving a request message sent by an H-NWDAF based on user consent information, whether to indicate a V-NWDAF to send collected data and/or analysis result regarding a target UE in a VPLMN.

In some embodiments, the executing unit 310 is configured to:
in response to receiving the request message sent by the H-NWDAF based on the user consent information, and determining, based on a regulatory policy and/or operator policy, that the H-NWDAF is allowed to request and obtain the collected data and/or analysis result from the V-NWDAF, forward the request message to the V-NWDAF, where the request message is used to indicate the V-NWDAF to send the collected data and/or analysis result regarding the target UE in the VPLMN.

Some embodiments of this disclosure provide a communication device, including:
a memory, configured to store instructions executable by a processor;
a processor, respectively connected to the memory;
where the processor is configured to implement the information processing method according to any of the foregoing technical solutions.

The processor may include various types of storage medium, which are non-transitory computer storage medium that can continue to store information stored thereon after the communication device is powered off.

Here, the communication device includes: a UE or a network element, and the network element may be any one of the aforementioned first to fourth network elements.

The processor may be connected to the memory through a bus, etc., and be used to read the executable program stored in the memory, for example, as shown in any one of FIG. 2 to FIG. 9.

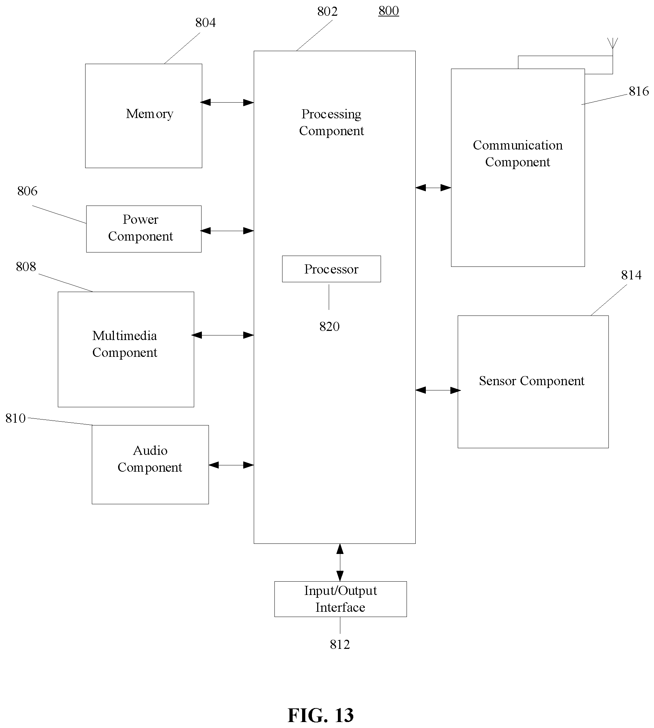

FIG. 13 is a block diagram showing a UE 800 according to some embodiments. For example, the UE 800 may be a mobile phone, a computer, a digital broadcast terminal, a messaging device, a game console, a tablet device, a medical device, a fitness device, a personal digital assistant, and the like.

Referring to FIG. 13, the UE 800 may include one or more of the following components: processing component 802, memory 804, power component 806, multimedia component 808, audio component 810, input/output (I/O) interface 812, sensor component 814, and communication component 816.

The processing component 802 generally controls the overall operation of the UE 800, such as operations associated with display, phone calls, data communications, camera operations, and recording operations. The processing component 802 may include one or more processors 820 to execute instructions to perform all or some of the steps of the methods described above. Additionally, the processing component 802 may include one or more modules that facilitate interaction between the processing component 802 and other components. For example, the processing component 802 may include a multimedia module to facilitate interaction between the multimedia component 808 and the processing component 802.

The memory 804 is configured to store various types of data to support operation at the UE 800. Examples of such data include instructions, contact data, phonebook data, messages, pictures, videos, and the like for any application or method operating on the UE 800. The memory 804 may be implemented by any type of volatile or non-volatile storage device or combination thereof, such as static random access memory (SRAM), electrically erasable programmable read only memory (EEPROM), erasable programmable read only memory (EPROM), programmable read only memory (PROM), read only memory (ROM), magnetic memory, flash memory, magnetic or optical disk.

The power component 806 provides power to various components of the UE 800. The power component 806 may include a power management system, one or more power sources, and other components associated with generating, managing, and distributing power to the UE 800.

The multimedia component 808 includes a screen that provides an output interface between the UE 800 and the user. In some embodiments, the screen may include a liquid crystal display (LCD) and a touch panel (TP). If the screen includes a touch panel, the screen may be implemented as a touch screen to receive input signals from a user. The touch panel includes one or more touch sensors to sense touch, swipe, and gestures on the touch panel. The touch sensor may not only sense the boundaries of a touch or swipe action, but also detect the duration and pressure associated with the touch or swipe action. In some embodiments, the multimedia component 808 includes a front camera and/or a rear camera. When the UE 800 is in an operation mode, such as a shooting mode or a video mode, the front camera and/or the rear camera may receive external multimedia data. Each of the front and rear cameras may be a fixed optical lens system or have focal length and optical zoom capability.

The audio component 810 is configured to output and/or input audio signals. For example, the audio component 810 includes a microphone (MIC) that is configured to receive external audio signals when the UE 800 is in operating modes, such as calling mode, recording mode, and voice recognition mode. The received audio signal may be further stored in the memory 804 or transmitted via the communication component 816. In some embodiments, the audio component 810 also includes a speaker for outputting audio signals.

The I/O interface 812 provides an interface between the processing component 802 and a peripheral interface module, which may be a keyboard, a click wheel, a button, or the like. These buttons may include, but are not limited to: home button, volume buttons, start button, and lock button.

The sensor assembly 814 includes one or more sensors for providing status assessments of various aspects of the UE 800. For example, the sensor assembly 814 can detect the open/closed state of the UE 800, the relative positioning of components, such as the display and keypad of the UE 800. The sensor assembly 814 can also detect a change in the position of the UE 800 or a component of the UE 800, the presence or absence of user contact with the UE 800, the orientation or acceleration/deceleration of the UE 800, and the temperature change of the UE 800. The sensor assembly 814 may include a proximity sensor configured to detect the presence of nearby objects in the absence of any physical contact. The sensor assembly 814 may also include a light sensor, such as a CMOS or CCD image sensor, for use in imaging applications. In some embodiments, the sensor assembly 814 may also include an acceleration sensor, a gyroscope sensor, a magnetic sensor, a pressure sensor, or a temperature sensor.

The communication component 816 is configured to facilitate wired or wireless communication between the UE 800 and other devices. The UE 800 may access wireless networks based on communication standards, such as WiFi, 2G or 3G, or a combination thereof. In some embodiments, the communication component 816 receives broadcast signals or broadcast related information from an external broadcast management system via a broadcast channel. In some embodiments, the communication component 816 also includes a near field communication (NFC) module to facilitate short-range communication. For example, the NFC module may be implemented based on radio frequency identification (RFID) technology, infrared data association (IrDA) technology, ultra-wideband (UWB) technology, Bluetooth (BT) technology and other technologies.

In some embodiments, the UE 800 may be implemented by one or more application specific integrated circuits (ASICs), digital signal processors (DSPs), digital signal processing devices (DSPDs), programmable logic devices (PLDs), field programmable gate arrays (FPGAs), controllers, microcontrollers, microprocessors or other electronic components, which are configured to perform the forgoing methods.

In some embodiments, there is also provided a non-transitory computer-readable storage medium including instructions, such as the memory 804 including instructions, executable by the processor 820 of the UE 800 to perform the method described above. For example, the non-transitory computer-readable storage medium may be ROM, random access memory (RAM), CD-ROM, magnetic tape, floppy disk, optical data storage device, and the like.

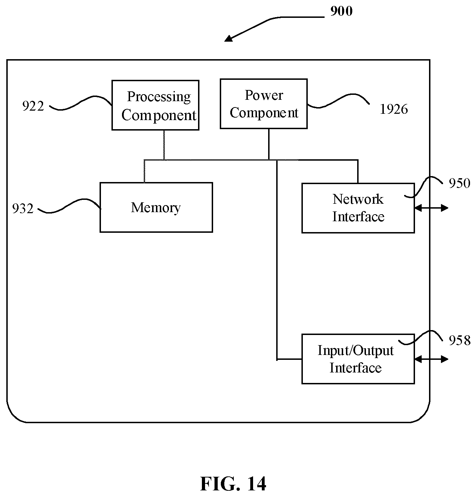

As shown in FIG. 14, it shows a structure of a communication device 900 according to some embodiments. For example, the communication device 900 may be provided as a network device, which may be the foregoing base station.

Referring to FIG. 14, the communication device 900 includes a processing component 922, which further includes one or more processors; and a memory resource represented by memory 932 for storing instructions executable by the processing component 922, such as application programs. The application program stored in memory 932 may include one or more modules each corresponding to a set of instructions. In addition, the processing component 922 is configured to execute instructions to perform any foregoing method applied in the base station, for example, at least one of the methods as shown in FIG. 2 to FIG. 9.

The communication device 900 may also include a power component 926 configured to perform power management of the communication device 900, a wired or wireless network interface 950 configured to connect the communication device 900 to a network, and an input-output (I/O) interface 958. The communication device 900 can operate based on an operating system stored in the memory 932, such as Windows Server^{™}, Mac OS X^{™}, Unix^{™}, Linux^{™}, FreeBSD^{™} or the like.

Other embodiments of this disclosure will be readily apparent to those skilled in the art from consideration of the specification and practice of the invention disclosed herein. This application is intended to cover any modification, use or adaptation of this disclosure, and these modifications, uses or adaptations follow the general principles of this disclosure and include common knowledge or conventional technical means in the art, which are not disclosed in this disclosure. The specification and examples are to be considered exemplary only, with a true scope and spirit of the disclosure being indicated by the following claims.

It should be understood that this disclosure is not limited to the precise constructions which have been described above and shown in the drawings, and various modifications and changes may be made without departing from the scope thereof. The scope of this disclosure is limited only by the scope of the appended claims.

## Claims

1. An information processing method, performed by a home-network data analytics function H-NWDAF, comprising:
in response to an analysis request for at least one target user equipment UE, determining, based on user consent information corresponding to the target UE, whether to send a request message to a visited-network data analytics function V-NWDAF for requesting collected data and/or analysis result regarding the target UE in a visited public land mobile network VPLMN.

2. The method according to claim 1, further comprising:
feedbacking the collected data and/or analysis result.

3. The method according to claim 1 or 2, wherein the target UE is a UE in a roaming state; and
the method further comprises:
querying, based on a UE identity of the target UE carried in the analysis request, the user consent information corresponding to the target UE in UE context.

4. The method according to claim 3, further comprising:
when the user consent information corresponding to the target UE does not exist in the UE context, obtaining the user consent information from a unified data management UDM; and
storing the user consent information in the UE context corresponding to the target UE.

5. The method according to claim 1 or 2, wherein determining, based on the user consent information corresponding to the target UE, whether to send the request message to the V-NWDAF for requesting the collected data and/or analysis result regarding the target UE in the VPLMN comprises:
sending, when an operator policy of the target UE, a roaming agreement of the VPLMN and the user consent information meet a predetermined condition, the request message to the V-NWDAF for requesting the collected data and/or analysis result regarding the target UE in the VPLMN; and
receiving the collected data and/or analysis result sent by the V-NWDAF based on the request message.

6. The method according to claim 1 or 2, wherein determining, based on the user consent information corresponding to the target UE, whether to send the request message to the V-NWDAF for requesting the collected data and/or analysis result regarding the target UE in the VPLMN comprises:
when an operator policy of the target UE, a roaming agreement of the VPLMN and the user consent information meet a predetermined condition, sending, through a visited-network exposure function V-NEF, the request message to the V-NWDAF for requesting the collected data and/or analysis result regarding the target UE in the VPLMN; and
receiving, through the V-NEF, the collected data and/or analysis result sent by the V-NWDAF based on the request message.

7. The method according to any one of claims 1 to 6, wherein the user consent information indicates at least one of:
a UE identity of a specific UE;
a network identity of the VPLMN and/or a network identity of a home public land mobile network HPLMN corresponding to the specific UE;
characteristic information of data analytics service;
result information of the data analytics service.

8. An information processing method, performed by a visited-network data analytics function V-NWDAF, comprising:
determining, in response to receiving a request message sent by a home-network data analytics function H-NWDAF based on user consent information or receiving an indication of a visited-network exposure function V-NEF, whether to send collected data and/or analysis result regarding a target user equipment UE in a visited public land mobile network VPLMN.

9. The method according to claim 8, wherein determining, in response to receiving the request message sent by the H-NWDAF based on the user consent information, whether to send the collected data and/or analysis result regarding the target UE in the VPLMN comprises:
in response to receiving the request message sent by the H-NWDAF based on the user consent information, and determining, based on a regulatory policy and/or operator policy, that the H-NWDAF is allowed to request and obtain the collected data and/or analysis result, sending to the H-NWDAF the collected data and/or analysis result regarding the target UE in the VPLMN.

10. The method according to claim 8, wherein determining, in response to receiving the request message sent by the H-NWDAF based on the user consent information, whether to send the collected data and/or analysis result regarding the target UE in the VPLMN comprises:
in response to receiving the request message, sent by the H-NWDAF based on the user consent information, forwarded by the V-NEF, and determining, based on a regulatory policy and/or operator policy, that the H-NWDAF is allowed to request and obtain the collected data and/or analysis result, sending, through the V-NEF, to the H-NWDAF the collected data and/or analysis result regarding the target UE in the VPLMN.

11. An information processing method, performed by a visited-network exposure function V-NEF, comprising:
determining, in response to receiving a request message sent by a home-network data analytics function H-NWDAF based on user consent information, whether to indicate a visited-network data analytics function V-NWDAF to send collected data and/or analysis result regarding a target user equipment UE in a visited public land mobile network VPLMN.

12. The method according to claim 11, wherein determining, in response to receiving the request message sent by the H-NWDAF based on the user consent information, whether to indicate the V-NWDAF to send the collected data and/or analysis result regarding the target UE in the VPLMN comprises:
in response to receiving the request message sent by the H-NWDAF based on the user consent information, and determining, based on a regulatory policy and/or operator policy, that the H-NWDAF is allowed to request and obtain the collected data and/or analysis result from the V-NWDAF, forwarding the request message to the V-NWDAF, wherein the request message is used to indicate the V-NWDAF to send the collected data and/or analysis result regarding the target UE in the VPLMN.

13. An information processing system, comprising: a home-network data analytics function H-NWDAF, a visited-network data analytics function V-NWDAF and a visited-network exposure function V-NEF; wherein
the H-NWDAF is configured to, in response to an analysis request for at least one target user equipment UE, determine based on user consent information corresponding to the target UE, whether to send a request message to the V-NWDAF for requesting collected data and/or analysis result regarding the target UE in a visited public land mobile network VPLMN;
the V-NWDAF is configured to determine, in response to receiving a request message sent by the H-NWDAF based on the user consent information or receiving an indication of the V-NEF, whether to send the collected data and/or analysis result regarding the target UE in the VPLMN; and
the V-NEF is configured to determine, in response to receiving the request message sent by the H-NWDAF based on the user consent information, whether to indicate the V-NWDAF to send the collected data and/or analysis result regarding the target UE in the VPLMN.

14. An information processing apparatus, applied to a home-network data analytics function H-NWDAF, comprising:
a determining unit, configured to: in response to an analysis request for at least one target user equipment UE, determine, based on user consent information corresponding to the target UE, whether to send a request message to a visited-network data analytics function V-NWDAF for requesting collected data and/or analysis result regarding the target UE in a visited public land mobile network VPLMN.

15. An information processing apparatus, applied to a visited-network data analytics function V-NWDAF, comprising:
a processing unit, configured to determine, in response to receiving a request message sent by a home-network data analytics function H-NWDAF based on user consent information or receiving an indication of a visited-network exposure function V-NEF, whether to send collected data and/or analysis result regarding a target user equipment UE in a visited public land mobile network VPLMN.

16. An information processing apparatus, applied to a visited-network exposure function V-NEF, comprising:
an executing unit, configured to determine, in response to receiving a request message sent by a home-network data analytics function H-NWDAF based on user consent information, whether to indicate a visited-network data analytics function V-NWDAF to send collected data and/or analysis result regarding a target user equipment UE in a visited public land mobile network VPLMN.

17. A communication device, comprising a processor, a memory, and an executable program stored on the memory and executable by the processor, wherein the processor is configured to, upon executing the executable program, implement the method according to any one of claims 1-7 or 8-10 or 11-12.

18. A computer storage medium storing an executable program thereon, wherein the executable program, upon being executed by a processor, is used for implementing the method according to any one of claims 1-7 or 8-10 or 11-12.
